(19) Europäisches Patentamt
European Patent Office
Office européen des brevets

(11) EP 0 439 197 B1

(12) EUROPEAN PATENT SPECIFICATION

(45) Date of publication and mention of the grant of the patent:
**07.04.1999 Bulletin 1999/14**

(51) Int. Cl.$^6$: **B32B 5/26**, B32B 5/28

(21) Application number: **91101000.7**

(22) Date of filing: **25.01.1991**

(54) **A fiber reinforced composite material**

Faserverstärkter Verbundwerkstoff

Matériau composite renforcé par des fibres

(84) Designated Contracting States:
**DE FR GB NL**

(30) Priority: **26.01.1990 JP 17510/90**
**23.04.1990 JP 106868/90**

(43) Date of publication of application:
**31.07.1991 Bulletin 1991/31**

(73) Proprietor: **NEC CORPORATION**
**Tokyo (JP)**

(72) Inventors:
- **Fujimoto, Jun**
**Minato-ku, Tokyo (JP)**
- **Ugo, Ryosuke**
**Minato-ku, Tokyo (JP)**

(74) Representative:
**Pätzold, Herbert, Dr.-Ing.**
**Steubstrasse 10**
**82166 Gräfelfing (DE)**

(56) References cited:
**EP-A- 0 294 232**
**EP-A- 0 299 086**
**US-A- 4 091 160**
**US-A- 4 524 107**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Xerox (UK) Business Services
2.16.7/3.6

## Description

The present invention relates to a fiber reinforced composite material according to the introductory portion of claim 1, and further which is effective to reduce vibration and noise when used for a construction body such as a space construction equipment, for example, an artificial satellite, an office automation machine and device, an automobile, a leisure article.

Fiber reinforced composite materials are those comprising inorganic fibers such as carbon fibers or glass fibers or organic fibers such as aramid (= aromatic polyamide) fibers integrally combined with a matrix resin such as an epoxy resin, a polyimide resin or a polyether-ether keton resin.

Such fiber reinforced composite materials, when compared with conventional metal structural materials, have advantages of light weight and high strength and also an advantage that any desired mechanical properties can be obtained by appropriately controlling orientation angles of the fibers. Therefore, the fiber reinforced composite materials tend to be widely used for construction materials particularly for those requiring light weight, such as a space construction equipment, an aircraft, an automobile, a leisure article.

As the use of such composite materials have been broadened, there occurs a problem of vibration.

Since the fiber reinforced composite materials are lightweight and have a small vibration damping property (of loss factor $\eta$ = 0.001 - 0.01) to an extent similar to that of conventional metal construction materials, they are liable to vibrate. Further, they are often used for molding a construction body as a whole and so it is impossible to rely upon any vibration damping by friction at connecting portions (structural damping) differently from conventional metal structural materials. Therefore, in a space construction equipement such as an artificial satellite, problems of troubles of loaded apparatus and lowering of precision of antenna positions occur owing to the vibration of the construction body. It is thus very important to improve the vibration damping property of fiber reinforced composite materials.

As reported by K. Shimizu in "Composite Materials", K. Kawata & T. Akasaka, Ed., Proc. Japan - U.S. Conference, Tokyo, 1981, pages 111 - 118, it is possible to increase vibration damping of a composite material by incorporating a flexibility-attaching agent such as polyethylene glycol, polypropylene glycol or liquid rubber into a matrix resin of the composite material. The vibration damping property of the matrix resin itself can be much improved by such agent, but that of the composite material in its entirety can only slightly be improved by such agent. Further, the stiffness of the composite material is considerably decreased by such agent. The use of the flexibility-attaching agent therefore is not effective.

An object of the present invention is therefore to present a fiber reinforced composite material having a large vibration damping property.

Said object is solved by the features of the characterizing portion of claim 1.

Prefered embodiments of the invention are mentioned in the subclaims.

The constrained type vibrational damping resin material used in the present invention is one that is described in the present inventors' European Patent Nos. EP-A-299086, EP-A-310681, EP-A-299086 and in the inventor's Japanese patent JP-A-206 396/89. Some of the representative resin materials described therein are recited hereinafter.

Further EP-A-0 294 232 discloses a coating copper foil with an expoxy resin impregnated fiber (glass, aramid or polyester) laminate. The epoxy resin is a polybutadiene-acrylonitrile copolymer with carboxyl groups at both ends, a non-flammable epoxy resin, a cresol novolak epoxy resin and a triphenyl phosphine catalyst, which is blended with dicyanidamide. The resulting laminates have "less flexure and excellent size stability" and are adapted to be bent.

Further US-A-4 524 107 describes an increased impact modification by adding ethylenic copolymers to theremosetting epoxy resins. More particularly therein is described a fiber impregnated dicyandiamide hardened epoxy resin containing an elastomer which does not covalently bond with the epoxy.

(1) A resin material containing (a-1) an epoxy resin, for example, glycidyl ether of bisphenol A, glycidyl ether of bisphenol F or glycidyl ether of bisphenol AD, (b) a curing agent, for example, amines, acid anhydrides, polyamides or dicyandiamide, and (c-1) a liquid polymer having in the molecule on the average more than 1.6 functional groups capable of reacting with the epoxy group of the epoxy type resin, said functional group being at least one selected from the group consisting of carboxyl group, acid anhydride radical, acid amide radical, amino group and mercapto group, and a glass transition temperature of less than 0°C, for example, a butadiene/acrylonitrile copolymer having carboxyl or amino terminals or a maleic anhydride-grafted ethylene/$\alpha$-olefin copolymer.

(2) A resin material containing (a-2) an epoxy resin comprising glycidyl ether of polyol or its polymer, for example, ethylene glycol diglycidyl ether, diethylene glycol diglycidyl ether, dipropylene glycol diglycidyl ether, 1,6-hexanediol diglycidyl ether, glycerol polyglycidyl ether, diglycerol polyglycidyl ether or polytetramethylene glycol diglycidyl ether, (b) a curing agent and (c-2) a compound comprising a polymer consist essentially of aromatic hydrocarbons, phenols or at least one thereof and having a softening point of less than 25 °C, for example, a condensate of xylene with formaldehyde, isopropenyltoluene polymer, phenol-modified aromatic polymerized oil, tricyclodedecene/toluene polymer or nonylphenol, the softening point of which is less than 25°C.

(3) A resin material containing an epoxy resin (I) obtained by addition reaction of (a-3) a bisphenol type epoxy resin represented by the following general formula with (c-3) a cyclic ester at the (c-3)/(a-3) weight ratio of 20/80 to 98/2 and (b) a curing agent, the (I)/(b) equivalent weight ratio of said epoxy resin (I) to said curing agent (b) being in the range of from 0.6 to 1.4.

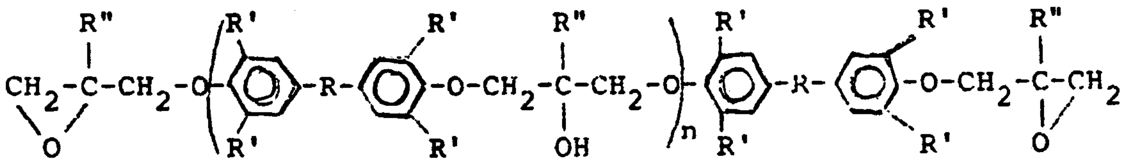

wherein R is 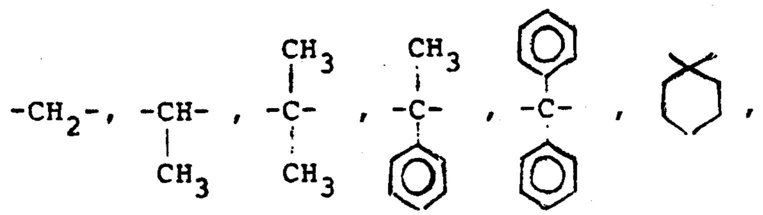

-O- or 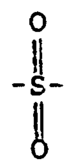 ,

R' is hydrogen atom or halogen atom, R" is hydrogen atom or methyl and n is an integer of 1 or more provided that parts of whole of the benzene rings may be hydrogenated.

Examples of the bisphenol type resin (a-3) are glycidyl ether of bisphenol A, glycidyl ether of bisphenol F, glycidyl ether of 1,1-bis(4-hydroxyphenyl)ethane, glycidyl ether of 1,1-bis(4-hydroxyphenyl)cyclohexane, glycidyl ether of 1,1-bis(4-hydroxyphenyl)-1-phenylethane or glycidyl ether of (4-hydroxyphenyl)sulfone.

Example of the cyclic ester (c-3) is β-propiolactone, δ-valerolactone or ε-caprolactone.

As for such constrained type vibrational damping resin material, a material is used having an elastic modulus of not higher than 10 $Kgf/mm^2$ preferably not higher 1 $Kgf/mm^2$ and a mechanical loss tan $\delta$ of not less than 0.1 preferably not less than 0.5.

As for the resin material other than said constrained type vibrational damping resin material, it is possible to use a conventional resin material used for a resin matrix of a fiber reinforced composite material, for example, a highly hard resin such as an epoxy resin (excepting the above mentioned constrained type vibrational damping epoxy resin), a polyimide resin or a polyether-ether keton resin.

As for the reinforcing fibers, any known reinforcing fibers, for example, inorganic reinforcing fibers such as carbon fibers, alumina fibers, silicon carbide fibers or glass fibers and organic reinforcing fibers such as aramid fibers or TECHMYLON (trade name) can be used. These reinforcing fibers can be used in various forms, for example, unidirectionally aligned strands or rovings, a woven fabric of plain weave, twill weave, satin weave, chopped short fibers, a non-woven mat-like fabric comprising intertwined fibers.

It is convenient and so is preferable to form the composite material layers (1) and (5) as prepreg sheets, respectively. Such prepreg sheets can be prepared by a method by itself known, that is, by impregnating reinforcing fibers in a matrix resin material and then semi-hardening the resin material.

The fiber reinforced composite material of the present invention can be produced by laminating at least one prepreg sheet for the layer (1) and at least one prepreg sheet for the layer (5) and integrating them by a moulding method by itself known, for example, an autoclave method or a hot-press method, but it is possible to form the layers (1) and (5) without using the prepreg sheets, that is, by applying the reinforcing fibers and the matrix resins to a mold in situ and integrating them as a laminated body.

In the fiber reinforced composite material of the present invention, the constrained type vibrational damping

resin material in the layer (1) absorbs flexural vibration by its large shear deformation and enables to obtain a large vibrational damping property which is indepent of orientation angles of reinforcing fibers. Therefore, it becomes possible to elect numbers and positions of the layers (1) and (5), form and direction of the reinforcing fibers in the layers (1) and (5) and kind of matrix resins in the layers (1) and (5) so that the final product has desired properties of elastic modulus, tensile strength, retaining its vibrational damping property at a constant high level.

Fig. 1 shows a cross section of a prepreg sheet which is used to produce the layer (1) of a fiber reinforced composite material of the present invention.

Fig. 2 shows a cross section of a prepreg sheet which is used to produce the layer (5) of a fiber reinforced composite material of the present invention.

Fig. 3 shows a cross section of a first embodiment of a fiber reinforced composite material of the present invention produced by using the prepreg sheets shown in Fig. 1 and Fig. 2.

Fig. 4 shows a cross section of a second embodiment of a fiber reinforced composite material of the present invention.

Fig. 5 illustrates frequency characteristic curves of loss factors of the composite materials of the first and the second embodiments shown in Fig. 3 and Fig. 4 and a prior art composite material.

Fig. 6 shows a cross section of a third embodiment of the composite material of the present invention.

Fig. 7 illustrates frequency characteristic curves of loss factors of the composite material of the third embodiment shown in Fig. 6 and a prior art composite material.

Fig. 8 shows cross section of a fourth embodiment of the composite material of the present invention.

Fig. 9 illustrates frequency characteristic curves of loss factors of the composite material of the fourth embodiment shown in Fig. 8 and a prior art composite material.

The present invention will be explained below further in detail with respect to its some embodiments.

Referring to Fig. 1, by impregnating a carbon fiber plain weave fabric 2 with a constrained type vibrational damping epoxy resin 3 based upon a polyether type epoxy resin and semi-hardening the epoxy resin, a preprey sheet 1 is produced. This prepreg sheet 1 has a mechanical loss tan $\delta$ of 1.5 at a room temperature.

In the similar manner, a prepreg sheet 5 is produced from a carbon fiber plain weave fabric 2 and an ordinary epoxy resin 4, as shown in Fig. 2.

The prepreg sheets 1 and 5 are laminated and moulded into an integral body by an autoclave method. In a first embodiment shown in Fig. 3, two prepreg sheets 1 are sandwiched between upper three prepreg sheets 5 and lower three prepreg sheets 5 to form a composite material C1. In a second embodiment shown in Fig. 4, six prepreg sheets 5 are sandwiched between an upper single prepreg sheet 1 and a lower single prepreg sheet 1 to form a composite material C2. In both of the first and the second embodiments, all of the prepreg sheets 1 and 5 are laminated so that the carbon fiber fabrics may align in the same fiber directions.

Relation between loss factors and frequencies is determined by applying flexural vibration to test samples of the composite materials C1 and C2 produced as above and a test sample of a prior art composite material C3 produced in the similar manner but from only eight sheets of the prepreg sheet 5 shown in Fig. 2. The loss factors are obtained from free damping curves at characteristic frequencies of the composite materials. The results are shown in Fig. 5, from which it is understood that the composite materials C1 and C2 of the present invention have much larger vibrational damping properties than the prior art composite material C3.

In a third embodiment shown in Fig. 6, three prepreg sheets 1 and four prepreg sheets 5 are laminated in turn and moulded into an integral body by a hot-press method. The carbon fiber fabrics 2 and the ordinary epoxy resin 4 used in the first and the second embodiments are used in the same manner in this third embodiment, wherein however a different constrained type vibrational damping resin produced by using a bisphenol A type epoxy resin as a base and adding thereto a monoepoxy resin so that the glass transition temperature may be adjusted to a room temperature is used. This constrained type vibrational damping resin has an elastic modulus of about 1 $Kgf/mm^2$ and a mechanical loss tan $\delta$ of about 1.3 at a room temperature.

As to the composite material C4 obtained in this third embodiment and a prior art composite material C5 produced in the similar manner but from only seven sheets of the prepreg sheet 5 shown in Fig. 2, frequency characteristic

curves of loss factors are determined as in the first and the second embodiments. The results are shown in Fig. 7, from which it is understood that the composite material C4 of the present invention has much larger vibrational damping properties than the prior art composite material C5.

In a fourth embodiment shown in Fig. 8, prepreg sheets 11 are those produced by impregnating unidirectionally aligned carbon fibers (sold by Toray Industries, Inc. under trade name Torayca T800) with a constrained type vibrational damping epoxy resin based upon a polyether type epoxy resin (diglycidyl ether of branched alkanediol oligomer) and semi-hardening the epoxy resin by means of an acid anhydride; and prepreg sheets 15 are those produced by impregnating the same carbon fibers with an ordinary epoxy resin (sold by Toray Industries, Inc. under trade name #2500) and semi-hardening the epoxy resin. Two prepreg sheets 11 are sandwiched between upper three prepreg sheets 15 and lower three prepreg sheets 15 and the dirertions of the carbon fibers in these total eight prepreg sheets are varied to have angles of 0°, +45°, -45° and 90° as shown in Fig. 8.

As to the composite material C6 obtained in this fourth embodiment and a prior art composite material C7 produced in the similar manner but from only eight sheets of the prepreg sheet 15, frequency characteristic curves of loss factors are determined as in the first to third embodiments. The results are shown in Fig. 9, from which it is understood that the composite material C6 of the present invention has much larger vibrational damping properties than the prior art composite material C7.

As to the composite materials C6 and C7, tensile strength is determined by using test slips of 25 mm width. The results are 2,480 Kgf for the composite material C6 (fluctuation coefficient showing dispersion = 3.2 % ) and 2,510 Kgf for the composite material C7 (fluctuation coefficient = 5.7 %). It is understood that the composite material C6 of the present invention has a tensile strength comparable with that of the prior art composite material C7 and a fluctuation coefficient smaller than that of the prior art composite material C7 and so has improved reliability.

In the above embodiments, carbon fibers are used as the reinforcing fibers. It is however also possible to use inorganic fibers such as glass fibers or organic fibers such as aramid fibers and obtain similar effects.

As explained in detail as above, the present invention has enabled to present a fiber reinforced composite material having a large vibration damping property, which is very useful to solve the problems of troubles of loaded apparatus and lowering of precision of antenna positions in a space construction equipment such as an artificial satellite, and noises in an automobile.

## Claims

1. A laminated fiber reinforced composite material comprising:

    at least one composite material layer (1, 11), which comprise reinforcing fibers impregnated in a resin (3) containing epoxy based vibrational damping compositions, and

    at least one composite material layer (5, 15), which comprise reinforcing fibers impregnated in a resin material (4) different to said resin (3);
    **characterized** in that

    said composite material layers (1, 11) and (5, 15) being laminated and integrated, and said damping compositions having an elastic modulus of not higher than 10 $kgf/mm^2$ and a mechanical loss tan a of not less than 0.1.

2. The fiber reinforced composite material according to claim 1, wherein said damping compositions have an elastic modulus of not higher than 1 $kgf/mm^2$ and a mechanical loss tan $\sigma$ of not less than 0.5.

3. The fiber reinforced composite material according to claim 1 wherein said reinforcing fibers are inorganic reinforcing fibers such as carbon fibers or glass fibers or organic reinforcing fibers such as aramid fibers.

4. The laminated fiber reinforced composite material according to claim 1, wherein said resin (3) is based upon a bisphenol A type epoxy resin, thereto a monoepoxy resin is added, and said damping compositions have an elastic modulus of about 1 $kgf/mm^2$ and a mechanical loss tan $\sigma$ of about 1.3 at a room temperature, and wherein three of said composite layers (1) and four of said composite layers (5) are arranged in an alternating relationship.

5. The laminated fiber reinforced composite material according to claim 1, wherein said resin (3) is based upon a polyether type epoxy resin and two layers of said composite layer (1) having a mechanical loss tan $\sigma$ of 1.5 at room temperature are sandwiched between upper three and lower three layers of said composite material layer (5), whereby said composite material layers (1) and (5) are laminated, so that the carbon fiber fabrics may align in the same fiber directions.

6. The laminated fiber reinforced composite material according to claim 1, wherein said resin (3) is based upon a polyether type epoxy resin and six layers of said composite material layer (5) are sandwiched between an upper and lower single layer of said composite material layer (1), having a mechanical loss tan $\sigma$ of 1.5 at room temperature, whereby said composite material layers (1) and (5) are laminated, so that the carbon fiber fabrics may align in the same fiber directions.

7. The laminated fiber reinforced composite material according to claim 1, wherein said reinforcing fibers of said composite material layers (11) are unidirectionally aligned carbon fibers, and said resin (3) is based upon a polyether type epoxy resin (diglycidyl ether of branched alkanediol oligomer), and said resin (4) is based upon an ordinary epoxy resin, and two layers of said composite material layers (11) are sandwiched between upper three and lower three layers of said composite material layer (15), and the directions of the carbon fibers in said total eight composite material layers (11, 15) are arranged as follows:

   the upper plate and lower plate composite material layers (15) of said total eight layers are aligned in the same direction; defining a first direction;

   the intermediate layers of the upper three and lower three composite material layers (15) are aligned in the same direction, defining a second direction, having an angle of +45° with respect to said first direction;

   the remaining layers of the composite material layers (15) are aligned in the same direction, defining a third direction, having an angle of -45° with respect to said first direction;

   said two composite material layers (11) are aligned in the same direction having an angle of 90° with respect to said first, second and third direction.

**Patentansprüche**

1. Faserverstärkter Verbundwerkstoff bestehend aus:

   wenigstens einer Verbundwerkstoffschicht (1, 11),
   bestehend aus Verstärkungsfasern, die mit einem Kunstharz (3) imprägniert sind, das Kunstharz (3) enthält Zusammensetzungen zur Vibrationsdämpfung auf Epoxid-Basis, und
   wenigstens einer Verbundwerkstoffschicht (5, 15), bestehend aus Verstärkungsfasern, die mit einem Kunstharz (4) imprägniert sind, das von dem Kunstharz (3) verschieden ist;
   **dadurch gekennzeichnet**, daß
   die Verbundwerkstoffschichten (1, 11) und (5, 15) sind laminiert und integriert, und die Zusammensetzungen zur Dämpfung haben ein Elastizitätsmodul nicht größer als 10 $kgf/mm^2$ und eine mechanische Abschwängung tan$\delta$ nicht kleiner als 0.1.

2. Faserverstärkter Verbundwerktsoff nach Anspruch 1, wobei die Zusammensetzungen zur Dämpfung ein Elastizitätsmodul haben, das nicht größer ist als 1 $kgf/mm^2$, und eine mechanische Abschwächung tan$\delta$ haben, die nicht kleiner als 0.5 ist.

3. Faserverstärkter Verbundwerkstoff nach Anspruch 1, wobei die Verstärkungsfasern anorganische Verstärkungsfasern, wie Kohlenstofffasern oder Glasfasern oder organische Verstärkungsfasern, wie Aramidfasern sind.

4. Faserverstärkter Verbundwerkstoff nach Anspruch 1, wobei das Kunstharz (3) Kunstharz auf Bisphenol A-Epoxidbasis ist, und zu dem Kunstharz (3) Monoepoxid-Kunstharz zugefügt ist, und die Zusammensetzungen zur Dämpfung einen Elastizitätsmodus von ungefähr 1 $kgf/mm^2$ und eine mechanische Abschwächung tan$\delta$ von ungefähr 1.3 bei Zimmertemperatur haben, und drei der Verbundwerkstoffschichten (1) und vier der Verbundwerkstoffschichten (5) alternierend angeordnet sind.

5. Faserverstärkter Verbundwerkstoff nach Anspruch 1, wobei das Kunstharz (3) Kunstharz auf Polyetherepoxid-Basis ist und zwei Schichten der Verbundwerkstoffschichten (1) eine mechanische Abschwächung tan$\delta$ von 1.5 bei Raumtemperatur haben und zwischen oberen drei Schichten und unteren drei Schichten der Verbundwerkstoffschichten (5) angeordnet sind, wobei die Verbundwerkstoffschichten (1) und (5) derart laminiert sind, daß die Kohlenstoff-Fasergewebe die gleiche Faserrichtung haben können.

6. Faserverstärkter Verbundwerkstoff nach Anspruch 1, wobei das Kunstharz (3) ein Kunstharz auf Polyetherepoxid-Basis ist und sechs Schichten der Verbundwerkstoffschichten (5) zwischen einer oberen und unteren einzelnen Schicht der Verbundwerkstoffschichten (1) angeordnet sind, die Verbundwerkstoffschichten (1) eine mechanische Abschwächung tanδ von 1,5 bei Raumtemperatur haben, und die Verbundwerkstoffschichten (1) und (5) derart laminiert sind, daß die Kohlenstoff-Fasergewebe die gleichen Faserrichtungen haben können.

7. Faserverstärkter Verbundwerkstoff nach Anspruch 1, wobei die Verstärkungsfasern der Verbundwerkstoffschichten (11) sind Kohlenstoffasern, die in eine Richtung ausgerichtet sind, und das Kunstharz (3) ist ein Kunstharz auf Polyetherepoxid-Basis (Diglycidylether aus verzweigtem Alkandiol-Oligomer), und das Kunstharz (4) ist Kunstharz auf herkömmlicher Kunstharzbasis, und zwei Schichten der Verbundwerkstoffschichten (11) sind zwischen oberen drei und unteren drei Schichten der Verbundwerkstoffschichten (15) angeordnet, und die Richtungen der Kohlefasern aller acht Verbundwerkstoffschichten (11, 15) sind wie folgt angeordnet:

   die obere Deckschicht und die untere Deckschicht der Verbundwerkstoffschichten (15) der insgesamt acht Schichten sind in die gleiche Richtung ausgerichtet, wodurch bei eine erste Richtung definiert wird;
   die mittleren Schichten der oberen drei und unteren drei Verbundwerkstoffschichten (15) sind in die gleiche Richtung ausgerichtet, wodurch eine zweite Richtung definiert wird,
   die zweite Richtung weicht bezogen auf die erste Richtung um einen Winkel von 45° ab;
   die übrigen Schichten der Verbundwerkstoffschichten (15) sind in die gleiche Richtung ausgerichtet, wodurch eine dritte Richtung definiert wird, die dritte Richtung weicht bezogen auf die erste Richtung um einen Winkel von -45° ab; die beiden Verbundwerkstoffschichten (11) sind in die gleiche Richtung angeordnet, die bezüglich der ersten, zweiten und dritten Richtung einen Winkel von 90° hat.

## Revendications

1. Matériau composite stratifié renforcé par des fibres, comprenant :

   au moins une couche de matériau composite (1, 11), qui comprend des fibres renforçantes imprégnées dans une résine (3) contenant des compositions amortissant les vibrations à base d'époxy, et
   au moins une couche de matériau composite (5, 15), qui comprend des fibres renforcantes imprégnées dans une matière de résine (4) différente de ladite résine (3) ;
   caractérisé en ce que lesdites couches de matériau composite (1, 11) et (5, 15) sont stratifiées et intégrées, et lesdites compositions d'amortissement ont un module élastique non supérieur à 10 kgf/$mm^2$ et une perte mécanique tg σ non inférieure à 0,1.

2. Matériau composite renforcé par des fibres selon la revendication 1, dans lequel lesdites compositions d'amortissement ont un module élastique non supérieur à 1 kgf/$mm^2$ et une perte mécanique tg σ non inférieure à 0,5.

3. Matériau composite renforcé par des fibres selon la revendication 1, dans lequel lesdites fibres renforçantes sont des fibres renforçantes inorganiques telles que des fibres de carbone ou des fibres de verre ou des fibres renforçantes organiques telles que des fibres d'aramide.

4. Matériau composite renforcé par des fibres stratifié selon la revendication 1, dans lequel ladite résine (3) est à base d'une résine époxy de type bisphénol A, à laquelle une résine monoépoxy est ajoutée, et lesdites compositions d'amortissement ont un module élastique d'environ 1 kgf/$mm^2$ et une perte mécanique tg σ d'environ 1,3 à température ambiante, et dans lequel trois desdites couches composites (1) et quatre desdites couches composites (5) sont arrangées dans une relation alternée.

5. Matériau composite renforcé par des fibres stratifié selon la revendication 1, dans lequel ladite résine (3) est à base d'une résine époxy de type polyéther, et deux couches de ladite couche composite (1) ayant une perte mécanique tg σ de 1,5 à température ambiante sont mises en sandwich entre trois couches supérieures et trois couches inférieures de ladite couche de matériau composite (5), lesdites couches de matériau composite (1) et (5) étant stratifiées de sorte que les étoffes de fibres de carbone puissent s'aligner dans les mêmes directions de fibres.

6. Matériau composite renforcé par des fibres stratifié selon la revendication 1, dans lequel ladite résine (3) est à base d'une résine époxy de type polyéther, et six couches de ladite couche de matériau composite (5) sont mises en sandwich entre une couche unique supérieure et une couche unique inférieure de ladite couche de matériau composite (1), ayant une perte mécanique tg σ de 1,5 à température ambiante, lesdites couches de matériau composite (1) et (5) étant stratifiées de sorte que les étoffes de fibres de carbone puissent s'aligner dans les mêmes directions de fibres.

7. Matériau composite renforcé par des fibres stratifié selon la revendication 1, dans lequel lesdites fibres renforçantes desdites couches de matériau composite (11) sont des fibres de carbone alignées unidirectionnellement, et ladite résine (3) est à base d'une résine époxy de type polyéther (éther diglycidylique d'un oligomère d'alcanediol ramifié), et ladite résine (4) est à base d'une résine époxy ordinaire, et deux couches desdites couches de matériau composite (11) sont mises en sandwich entre trois couches supérieures et trois couches inférieures de ladite couche de matériau composite (15), et les directions des fibres de carbone dans lesdites huit couches totales de matériau composite (11, 15) sont arrangées comme suit :

les couches de matériau composite de la plaque supérieure et de la plaque inférieure (15) desdites huit couches totales sont alignées dans la même direction ; définissant une première direction ;
les couches intermédiaires des trois couches supérieures et trois couches inférieures de matériau composite (15) sont alignées dans la même direction, définissant une deuxième direction, ayant un angle de +45° par rapport à ladite première direction ;
les autres couches des couches de matériau composite (15) sont alignées dans la même direction, définissant une troisième direction, ayant un angle de -45° par rapport à ladite première direction ;
lesdites deux couches de matériau composite (11) sont alignées dans la même direction ayant un angle de 90° par rapport auxdites première, deuxième et troisième directions.

FIG. 1

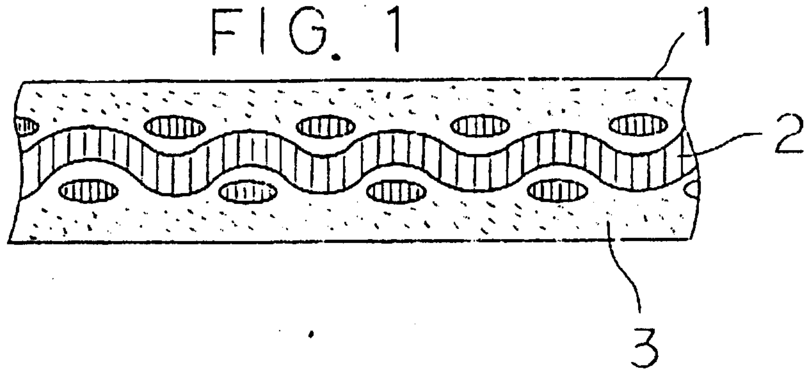


FIG. 2

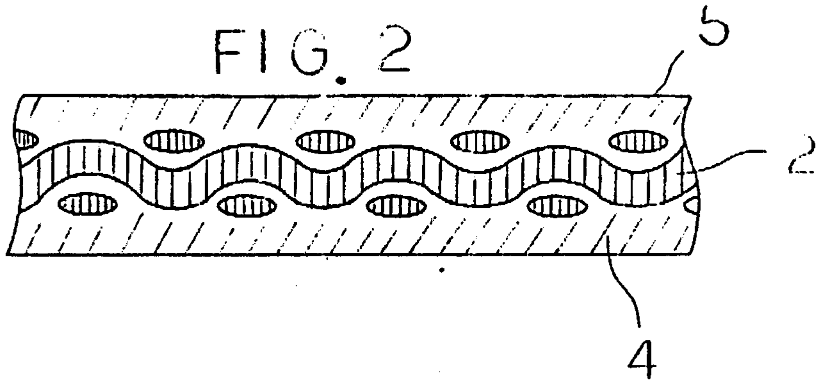


FIG. 3

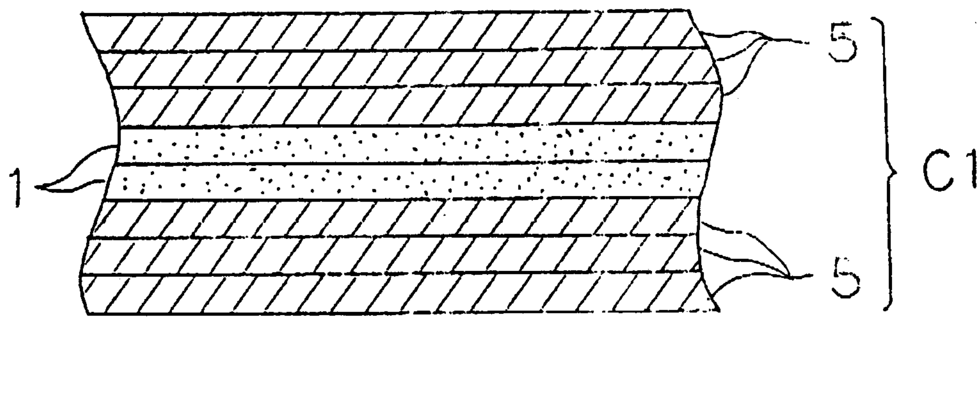

FIG. 4

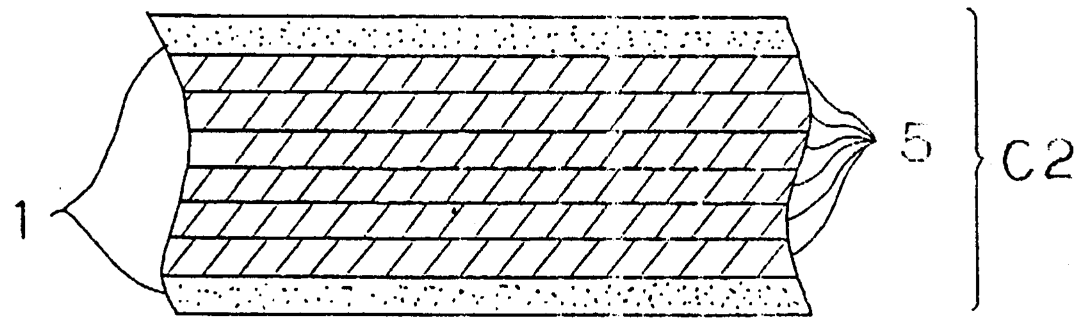


FIG. 5

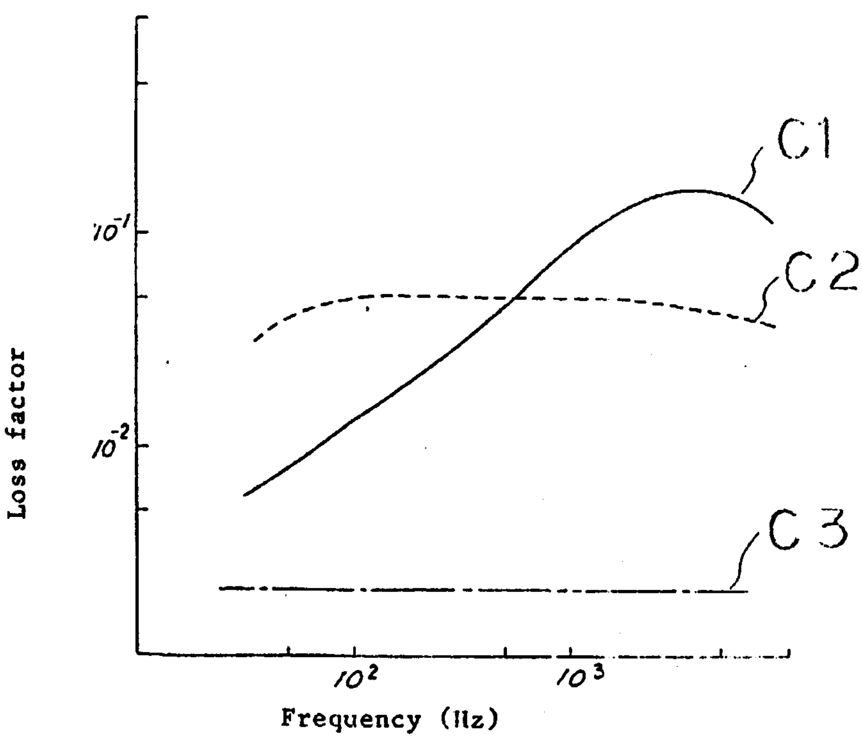

FIG. 6

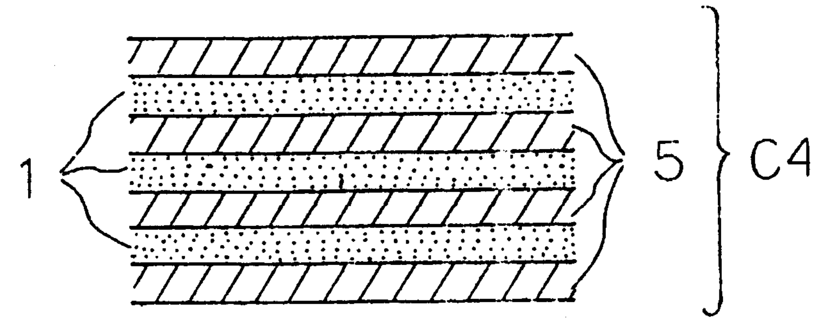


FIG. 7

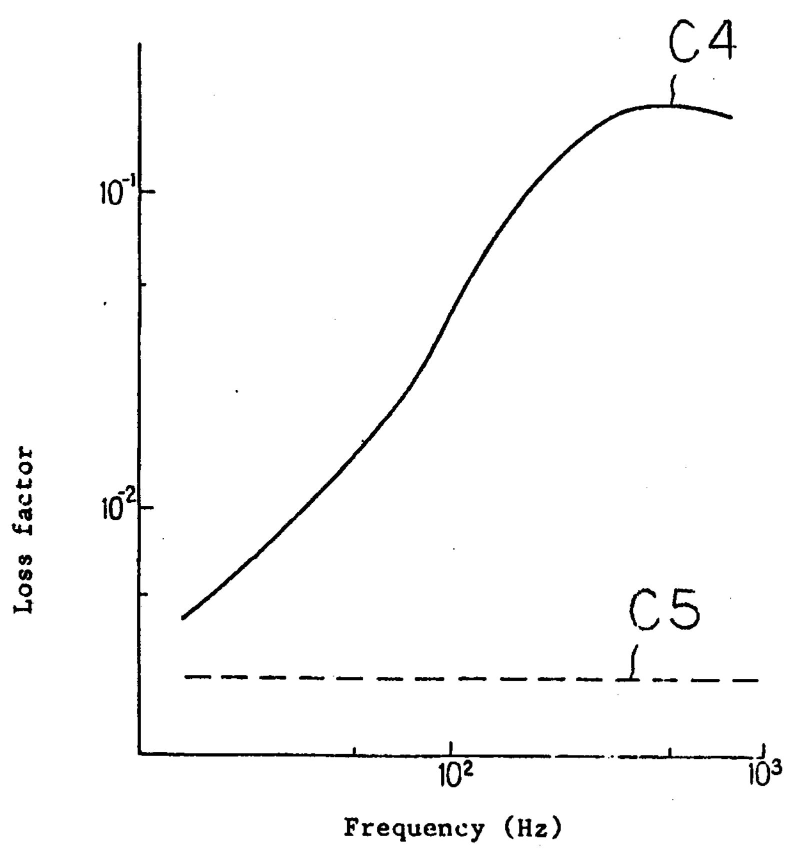

FIG. 8

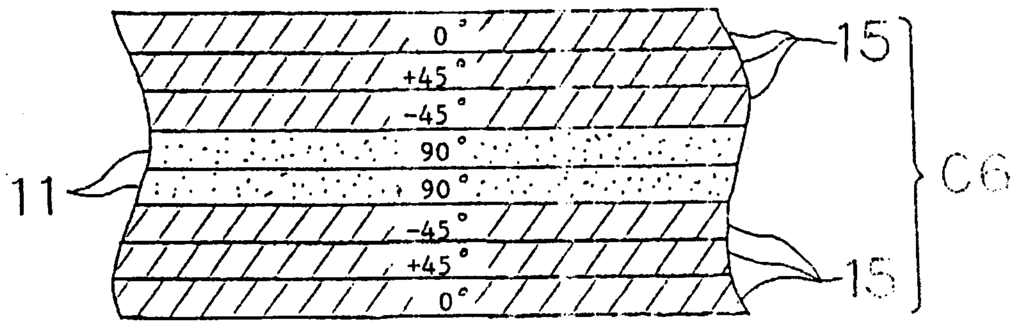
0°
+45°
-45°
90°
90°
-45°
+45°
0°
15
11
C6
15

FIG. 9

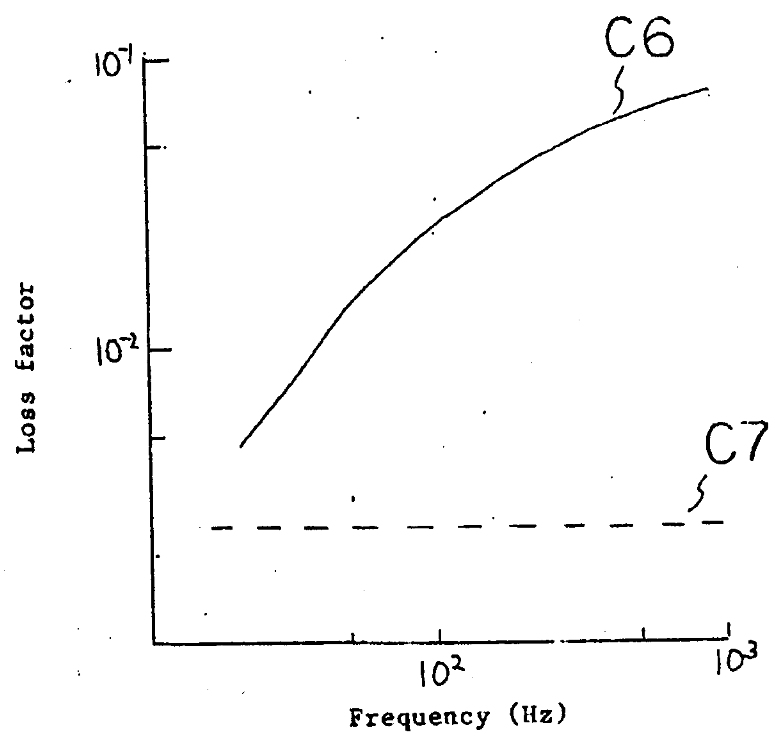
C6
C7
$10^{-1}$
$10^{-2}$
Loss factor
$10^{2}$
$10^{3}$
Frequency (Hz)